# EUROPEAN PATENT SPECIFICATION

(11) **EP 1 672 982 B1**
(45) Date of publication and mention of the grant of the patent: **27.08.2008**
(21) Application number: 04736224.9
(22) Date of filing: 07.06.2004
(51) Int. Cl.: A01N 57/20, A01N 41/10, A01N 43/828, A01N 43/78, A01N 37/22

(54) **METHOD OF CONTROLLING WEEDS**
VERFAHREN ZUR BEKÄMPFUNG VON UNKRÄUTERN
PROCEDE DE LUTTE CONTRE LES MAUVAISES HERBES

(30) Priority: 18.06.2003 GB 0314190
(43) Date of publication of application: 28.06.2006
(73) Proprietor: Syngenta Participations AG, 4058 Basel (CH)
(72) Inventor: CORNES, Derek, CH-4085 Basel (CH); JOHNSON, Michael, Donald, Greensboro, NC 27409 (US)
(74) Representative: Swift, Jane Elizabeth Berrisford
(86) International application number: PCT/GB2004/002409
(87) International publication number: WO 2004/112481

(56) References cited:
- WO-A-01/43550
- DE-A- 19 834 627

## Description

The present invention relates to a method of providing season-long control of unwanted vegetation from a single post-emergence treatment.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

Agricultural pesticide manufacturers have identified the need for broad-spectrum, long-acting pesticidal products. Single active ingredient formulations rarely meet such requirements, and thus combination products, perhaps containing up to four complementary biologically active ingredients, need to be developed. Many combination products (i.e. products containing more than one active ingredient) are currently available, but none of these provide broad-spectrum, season-long control from a single application of the product. '

It is therefore an object of the present invention to provide a method of providing season-long control of unwanted vegetation from a single post-emergence treatment.

The individual compounds used in the method of the invention are independently known in the art for their effect on plant growth. For example, the herbicidal cyclohexanedione compound 2-(2'-nitro-4'-methylsulphonylbenzoyl)-1,3-cyclohexanedione (mesotrione) is a selective herbicide disclosed in U.S. Patent No. 5,049,046 along with a number of other cyclohexanedione compounds. The acetamides, in particular 2-chloro-*N*-(2-ethyl-6-methylphenyl)-*N*-(2-methoxy-1-methylethyl)acetamide (metolachlor), are a known class of compounds with herbicidal activity. Glyphosate is a non-selective herbicide available *inter alia* under the tradename Touchdown^{®}. Although all these components are herbicidally active on their own when applied to unwanted vegetation, none of them individually are able to provide the broad-spectrum season-long control from a single application that is now being required by the agricultural industry.

Some of the compositions which can used in the method according to the present invention are known from DE19834627 and WO01/43550.

Accordingly, the present invention provides a method for the season-long control of unwanted vegetation, said method comprising a single post-emergence application of a herbicidal combination comprising a 2-(substituted benzoyl)-1,3-cyclohexanedione or metal chelate

thereof, glyphosate or a salt thereof and an acetamide to the locus of said unwanted vegetation. By the term 'season-long control' we mean that only one application of the herbicidal composition is required per season for any given crop, and that the unwanted vegetation will remain under control for the duration of the season. The 'season' is generally up to 120 days long, for example from 40 to 120 days, such as 50 to 120 days long.

A second aspect of the invention provides the use of a herbicidal combination comprising a 2-(substituted benzoyl)-1,3-cyclohexanedione or metal chelate thereof, glyphosate or a salt thereof and an acetamide, for the season-long control of unwanted vegetation, by a single post-emergence application of the combination.

Suitably, the 2-(substituted benzoyl)-1,3-cyclohexanedione for use in the present invention is a compound of formula (I) 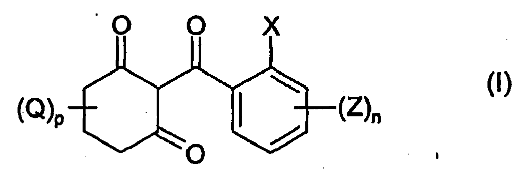 wherein X represents a halogen atom; a straight- or branched-chain alkyl or alkoxy group containing up to six carbon atoms which is optionally substituted by one or more groups -OR¹ or one or more halogen atoms; or a group selected from nitro, cyano, - CO₂R², -S(O)ₘR¹, -O(CH₂)ᵣOR¹, -COR², -NR²R³, -SO₂NR²R³, -CONR²R³, -CSNR²R³ and -OSO₂R⁴;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵, C₁₋₆ alkyl, C₁₋₆ alkoxy, C₁₋₆ haloalkyl C₁₋₆ haloalkoxy, carboxy, C₁₋₆ alkylcarbonyloxy, C₁₋₆ alkoxycarbonyl, C₁₋₆ alkylcarbonyl, amino, C₁₋₆ alkylamino, C₁₋₆ dialkylamino having independently the stated number of carbon atoms in each alkyl group, C₁₋₆ alkylcarbonylamino, C₁₋₆ alkoxycarbonylamino, C₁₋₆ alkylaminocarbonylamino, C₁₋₆ dialkylaminocarbonylamino having independently the stated number of carbon atoms in each alkyl group, C₁₋₆ alkoxycarbonyloxy, C₁₋₆ alkylaminocarbonyloxy, C₁₋₆ dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents a straight or branched chain alkyl group containing up to six carbon atoms;
each Q independently represents C₁₋₄ alkyl or -CO₂R⁶ wherein R⁶ is C₁₋₄ alkyl;
m is zero, one or two;
n is zero or an integer from one to four;
r is one, two or three; and
p is zero or an integer from one to six
and any agriculturally acceptable metal chelate thereof.

Suitably, X is chloro, bromo, nitro, cyano, C₁-C₄ alkyl, -CF₃, -S(O)ₘR¹, or -OR¹; each Z is independently chloro, bromo, nitro, cyano, C₁-C₄ alkyl, -CF₃, -OR¹, -OS(O)ₘR⁵ or -S(O)ₘR⁵; n is one or two; and p is zero, one or two.

Preferably, the 2-(substituted benzoyl)-1,3-cyclohexanedione of formula (I) is selected from the group consisting of 2-(2'-nitro-4'-methylsulphonylbenzoyl)-1,3-cyclohexanedione, 2-(2'-nitro-4'-methylsulphonyloxybenzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione; most preferably is 2-(2'-nitro-4'-methylsulphonyl benzoyl)-1,3-cyclohexanedione.

The 2-(substituted benzoyl)-1,3-cyclohexanedione of formula (I) may exist in enolic tautomeric forms that may give rise to geometric isomers. Furthermore, in certain cases, the various substituents may contribute to optical isomerism and/or stereoisomerism. All such tautomeric forms, racemic mixtures and isomers are included within the scope of the present invention.

Agriculturally acceptable metal chelates of compounds of formula (I) are described in more detail in EP 0800317. In particular, metal ions which may be useful in forming the metal chelate compounds include di- and tri-valent transition metal ions such as Cu²⁺, Zn²⁺, Co²⁺, Fe²⁺, Ni²⁺ and Fe³⁺. The selection of a particular metal ion to form the metal chelate compound will depend upon the dione compound to be chelated. Those skilled in the art will readily be able to determine the appropriate metal ion for use with a specific dione compound, without undue experimentation. The preferred metal ions are divalent metal ions, particularly Cu²⁺, Zn²⁺, Co²⁺, with Cu²⁺ being especially preferred.

Suitably, the acetamide for use in the present invention is a chloroacetamide or an oxyacetamide.

In one embodiment of the invention, the acetamide is a chloroacetamide of formula (II) 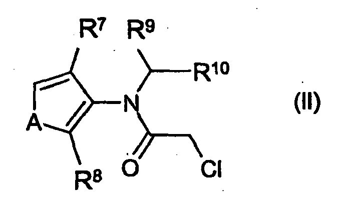 wherein R⁷ is hydrogen, methyl or ethyl; R⁸ is hydrogen, methyl or ethyl; R⁹ is hydrogen or methyl; R¹⁰ is methyl, -OCH₃, -CH₂OCH₃, -OCH₂CH₃, -CH₂OCH₂CH₂CH₃, -OCH(CH₃)₂, -OCH₂CH₂CH₂CH₃ or a group 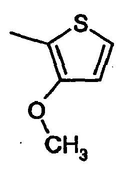 or 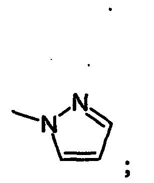 and A is S or CH=CH.

In one preferred embodiment, A is CH=CH; R⁷ is hydrogen, methyl or ethyl; R⁸ is hydrogen, methyl or ethyl; R⁹ is hydrogen or methyl; R¹⁰ is methyl, -OCH₃, - CH₂OCH₃; -OCH₂CH₃, -CH₂OCH₂CH₂CH₃, -OCH(CH₃)₂, or -OCH₂CH₂CH₂CH₃. Preferably, the chloroacetamide is selected from the group consisting of metolachlor, acetochlor and alachlor, preferably metolachlor, and most preferably, s-metolachlor.

In another preferred embodiment A is S; R⁷, R⁸, and R⁹ are methyl; and R¹⁰ is methoxymethyl. Preferably, the chloroacetamide is dimethenamide or p-dimethenamide.

In a further embodiment of the invention, the acetamide is an oxyacetamide of formula (III) 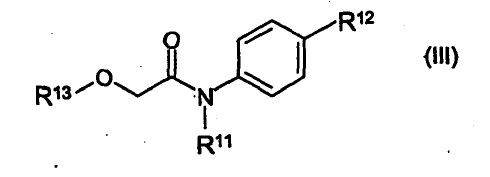 wherein R¹¹ is hydrogen, methyl, ethyl, propyl or isopropyl; R¹² is hydrogen or halo; and R¹³ is a group

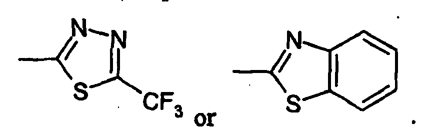

Suitably, R¹¹ is methyl or isopropyl; R¹² is hydrogen or fluoro.

Preferably, the oxyacetamide is flufenacet or mefanacet; most preferably, flufenacet.

The glyphosate for use in the invention may be present as the free acid or as a suitable agriculturally acceptable salt. Such salts include, but are not limited to, the potassium, ammonium, isopropylammonium, sodium and trimethylsulfonium salts.

In one particularly preferred embodiment of the invention, the herbicidal combination for use in the method of the invention comprises 2-(2'-nitro-4'-methylsulphonylbenzoyl)-1,3-cyclohexanedione, glyphosate and s-metolachlor.

The rate at which the herbicidal components are applied will depend upon the particular type of weed to be controlled, the degree of control required, and the timing and method of application. In general, the components can be applied at an application rate of between about 400 g a.i./hectare (g/ha) and about 7750 g a.i./ha, based on the total amount of active ingredient. An application rate of between about 940 g a.i/ha and 3750 g a.i./ha is preferred. Suitably, the cyclohexanedione is applied at a rate of 20-300 g a.i./ha, preferably 40-250 g a.i./ha; the glyphosate compound is applied at a rate of 200-1400 g a.i./ha, preferably 400-1000 g a.i./ha; and the acetamide is applied at a rate of 200-6000 g a.i./ha, preferably 500-2500 g a.i./ha. In an especially preferred embodiment of this invention, the components are administered in relative amounts sufficient to provide an application rate of at least 2000 g a.i./ha, of which the cyclohexanedione provides at least 100 g/ha.

A still further aspect of the invention provides a method for the season-long control of unwanted vegetation as hereinbefore described, wherein said herbicidal combination further comprises one or more additional active ingredients. The additional active ingredient is suitably a pesticide, such as a herbicide, a fungicide, an insecticide, a nematocide or the like; preferably, the additional active ingredient is a herbicide. Examples of suitable herbicides include a triazine, such as atrazine, terbuthylazine, simazine etc. Further examples of herbicides which may be of use in the invention will be known to those skilled in the art.

The components used in the method of the invention can be applied in a variety of ways known to those skilled in the art, at various concentrations. The combination of the invention is useful in controlling the growth of undesirable vegetation by post-emergence application to the locus where control is desired. The combination of the invention is particularly effective when applied post-emergence, preferably early post-emergence.

The combinations of the invention can be used over a wide range of crops, such as corn (maize), wheat, rice, potato or sugarbeet Suitable crops include those which are tolerant to one or more of the components in the composition. The tolerance may be natural tolerance produced by selective breeding or can be artificially introduced by genetic modification of the crop. Tolerance means a reduced susceptibility to damage caused by a particular herbicide compared to the conventional crop breeds. Crops can be modified or bred so as to be tolerant, for example to HPPD inhibitors like mesotrione, or EPSPS inhibitors like glyphosate. Corn (maize) is inherently tolerant to mesotrione.

The components used in the method of the invention may be administered simultaneously or sequentially. If administered sequentially, the components may be administered in any order in a suitable timescale, for example with no longer than 24 hours between the time of administering the first component and the time of administering the last component. Suitably, all the components are administered within a timescale of a few hours, such as one hour.

If the components are administered simultaneously, they may be administered separately or as a tank mix or as a pre-formulated mixture of all the components or as a pre-formulated mixture of some of the components tank mixed with the remaining components.

Therefore, a yet further aspect of the invention provides a herbicidal composition comprising a 2-(substituted benzoyl)-1,3-cyclohexanedione or metal chelate thereof, glyphosate or a salt thereof and an acetamide, provided that (i) when the 2-(substituted benzoyl)-1,3-cyclohexanedione is mesotrione, then the acetamide is not metolachlor, acetochlor, alachlor or dimethenamide, and (ii) when the acetamide is dimethenamide, then the 2-(substituted benzoyl)-1,3-cyclohexanedione is not 2-(2-chloro-4-methanesulfonylbenzoyl)-1,3-cyclohexanedione or 2-(4-methylsulfonyloxy-2-nitrobenzoyl)-4,4,6,6-tetramethyl-1,3-cyclohexanedione.

The compositions of the invention are useful as herbicides, demonstrating broad-spectrum, season-long control of the unwanted vegetation. The composition can be used over a wide range of crops, such as corn (maize), wheat, rice, potato or sugarbeet. Suitable crops include those which are tolerant to one or more of the components in the composition. The tolerance may be natural tolerance produced by selective breeding or can be artificially introduced by genetic modification of the crop. Tolerance means a reduced susceptibility to damage caused by a particular herbicide compared to the conventional crop breeds. Crops can be modified or bred so as to be tolerant, for example to HPPD inhibitors like mesotrione, or EPSPS inhibitors like glyphosate. Corn (maize) is inherently tolerant to mesotrione.

The herbicidal compositions of this invention also preferably comprise an agriculturally acceptable carrier therefore. In practice, the composition is applied as a formulation containing the various adjuvants and carriers known to or used in the industry for facilitating dispersion. The choice of formulation and mode of application for any given compound may affect its activity, and selection will be made accordingly. For example, the herbicidal composition of this invention may be a dustable powder, gel, a wettable powder, a water dispersible granule, a water-dispersable or water-foaming tablet, a briquette, an emulsifiable concentrate, a microemulsifiable concentrate, an oil-in-water emulsion, a water-in-oil emulsion, a dispersion in water, a dispersion in oil, a suspoemulsion, a soluble liquid (with either water or an organic solvent as the carrier), an impregnated polymer film, or other forms known in the art. These formulations may be suitable for direct application or may be suitable for dilution prior to application, said dilution being made either with water, liquid fertilizer, micronutrients, biological organisms, oil or solvent. The compositions are prepared by admixing the active ingredients with adjuvants including diluents, extenders, carriers, and conditioning agents to provide compositions in the form of finely-divided particulate solids, granules, pellets, solutions, dispersions or emulsions. Thus, it is believed that the active ingredients could be used with an adjuvant such as a finely-divided solid, a mineral oil, a liquid of organic origin, water, various surface active agents or any suitable combination of these.

The active may also be contained in very fine microcapsules in polymeric substances. Microcapsules typically contain the active material enclosed in an inert porous shell which allows escape of the enclosed material to the surrounds at controlled rates. Encapsulated droplets are typically about 0.1 to 500 microns in diameter. The enclosed material typically constitutes about 25 to 95% of the weight of the capsule. The active ingredient may be present as a monolithic solid, as finely dispersed solid particles in either a solid or a liquid, or it may be present as a solution in a suitable solvent. Shell membrane materials include natural and synthetic rubbers, cellulosic materials, styrenebutadiene copolymers, polyacrylonitriles, polyacrylates, polyesters, polyamides, polyureas, polyurethanes, other polymers familiar to one skilled in the art, chemically-modified polymers and starch xanthates. Alternative very fine microcapsules may be formed wherein the active ingredient is dispersed as finely divided particles within a matrix of solid material, but no shell wall surrounds the microcapsule.

Suitable agricultural adjuvants and carriers that are useful in preparing the compositions of the invention are well known to those skilled in the art.

Liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropyleneglycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octadecanoic acid, octyl amine acetate, oleic acid, oleylamine, o-xylene, phenol, polyethylene glycol (PEG400), propionic acid, propylene glycol, propylene glycol monomethyl ether, propylene glycol mono-methyl ether, p-xylene, toluene, triethyl phosphate, triethylene glycol, xylene sulfonic acid, paraffin, mineral oil, trichloroethylene, perchloroethylene, ethyl acetate, amyl acetate, butyl acetate, propylene glycol monomethyl ether and diethylene glycol monomethyl ether, methanol, ethanol, isopropanol, and higher molecular weight alcoholds such as amyl alcohol, tetrahydrofurfuryl alcohol, hexanol, octanol, etc., ethylene glycol, propylene glycol, glycerine, N-methyl-2-pyrrolidinone, and the like. Water is generally the carrier of choice for the dilution of concentrates.

Suitable solid carriers include talc, titanium dioxide, pyrophyllite clay, silica, attapulgite clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

A broad range of surface-active agents are advantageously employed in both solid and liquid compositions, especially those designed to be diluted with carrier before application. The surface-active agents can be anionic, cationic, nonionic or polymeric in character and can be employed as emulsifying agents, wetting agents, suspending agents, or for other purposes. Typical surface active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-C.sub.18 ethoxylate; alcohol-alkylene oxide addition products, such as tridecyl alcohol-C.sub.16 ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include crystallization inhibitors, viscosity modifiers, suspending agents, spray droplet modifiers, pigments, antioxidants, foaming agents, light-blocking agents, compatibilizing agents, antifoam agents, sequestering agents, neutralizing agents and buffers, corrosion inhibitors, dyes, odorants, spreading agents, penetration aids, micronutrients, emolients, lubricants, sticking agents, dispersing agents, thickening agents, freezing point depressants, antimicrobial agents, and the like. The compositions can also contain other compatible components, for example, other herbicides, herbicide safeners, plant growth regulants, fungicides, insecticides, and the like and can be formulated with liquid fertilizers or solid, particulate fertilizer carriers such as ammonium nitrate, urea and the like.

The invention will now be described in more details with reference to the following examples.

A number of trial were carried out on a variety of weeds in a crop of maize using the following compositions:
1. Mesotrione/glyphosate
2. Mesotrione/glyphosate/S-metolachlor
3. Mesotrione/glyphosate/S-metolachlor/atrazine

The glyphosate was administered at two different levels. Treatment was given early post-emergence of the crop. The level of weed control was assessed at various days after application (DAA). An improvement in weed control is seen with the three- and four-way combination over the two-way combination. The results are given in Table 1.

| | | g a.i./ha | | | | | |
|---|---|---|---|---|---|---|---|
| Mesotrione | | 105 | 105 | 105 | 105 | 105 | 105 |
| Glyphosate | | 560 | 560 | 560 | 841 | 841 | 841 |
| S-metolachlor | | | 1051 | 1051 | | 1051 | 1051 |
| Atrazine | | | | 392 | | | 392 |
| | DAA | | | | | | |
| Abutilon Theophrasti | 29 | 99 | 99 | 99 | 99 | 99 | 99 |
| Abutilon Theophrasti | 47 | 67 | 100 | 93 | 93 | 97 | 99 |
| Abutilon Theophrasti | 34 | 99 | 99 | 99 | 99 | 99 | 99 |
| Amaranthus Retroflexus | 47 | 100 | 100 | 100 | 100 | 100 | 100 |
| Amaranthus Retroflexus | 41 | 99 | 99 | 99 | 99 | 99 | 99 |
| Amaranthus Retroflexus | 42 | 100 | 100 | 100 | 100 | 100 | 100 |
| Amaranthus Rudis | 47 | 100 | 100 | 100 | 100 | 100 | 100 |
| Amaranthus Rudis | 47 | 100 | 100 | 100 | 98 | 100 | 100 |
| Amaranthus Rudis | 42 | 97 | 93 | 97 | 97 | 92 | 98 |
| Amaranthus Tuberculatus | 50 | 100 | 98 | 100 | 100 | 98 | 99 |
| Amaranthus Tuberculatus | 38 | 96 | 100 | 100 | 97 | 99 | 99 |
| Ambrosia Artemisiifolia | 39 | 78 | 83 | 89 | 72 | 80 | 98 |
| Ambrosia Artemisiifolia | 57 | 74 | 85 | 95 | 78 | 93 | 95 |
| Ambrosia Artemisiifolia | 45 | 95 | 93 | 98 | 97 | 95 | 98 |
| Ambrosia Artemisiifolia | 38 | 100 | 100 | 100 | 98 | 98 | 100 |
| Ambrosia Trifida | 57 | 85 | 96 | 92 | 92 | 98 | 92 |
| Brachiaria Platyphylla | 41 | 98 | 99 | 100 | 99 | 100 | 100 |
| Chenopodium Album | 39 | 94 | 93 | 97 | 95 | 96 | 98 |
| Chenopodium Album | 29 | 96 | 97 | 97 | 92 | 97 | 98 |
| Chenopodium Album | 45 | 99 | 100 | 100 | 100 | 100 | 99 |
| Chenopodium Album | 29 | 98 | 99 | 99 | 96 | 99 | 99 |
| Chenopodium Album | 50 | 97 | 100 | 100 | 100 | 100 | 100 |
| Chenopodium Album | 47 | 93 | 100 | 100 | 96 | 96 | 96 |
| Chenopodium Album | 34 | 99 | 99 | 99 | 99 | 99 | 99 |
| Chenopodium Album | 46 | 100 | 100 | 100 | 100 | 100 | 100 |
| Chenopodium Album | 57 | 93 | 96 | 96 | 93 | 99 | 99 |
| Convolvulus Arvensis | 29 | 95 | 98 | 96 | 94 | 96 | 99 |
| Digitaria ciliaris | 42 | 77 | 97 | 97 | 94 | 97 | 96 |
| Digitaria Sanguinalis | 29 | 91 | 99 | 98 | 95 | 99 | 99 |
| Digitaria Sanguinalis | 47 | 75 | 82 | 87 | 80 | 82 | 83 |
| Digitaria Sanguinalis | 41 | 98 | 100 | 100 | 99 | 100 | 100 |
| Echinochloa Crus-galli | 45 | 97 | 100 | 100 | 98 | 100 | 100 |
| Elusine Indica | 28 | 95 | 92 | 97 | 100 | 95 | 95 |
| Erichloa Villosa | 47 | 45 | 83 | 92 | 65 | 83 | 88 |
| Ipomoea Hederacea | 38 | 95 | 95 | 88 | 97 | 77 | 87 |
| Ipomoea Purpurea | 50 | 92 | 95 | 98 | 92 | 98 | 97 |
| Ipomoea Sp. | 29 | 27 | 37 | 30 | 50 | 68 | 57 |
| Ipomoea Sp. | 41 | 90 | 90 | 92 | 92 | 93 | 90 |
| Mollugo Verticillata | 29 | 86 | 96 | 97 | 91 | 96 | 97 |
| Panicum Dichotomiflorum | 38 | 92 | 99 | 100 | 87 | 98 | 99 |
| Raphanus Raphanistrum | 39 | 96 | 95 | 97 | 96 | 96 | 98 |
| Setaria Faberi | 39 | 77 | 88 | 94 | 70 | 82 | 98 |
| Setaria Faberi | 57 | 90 | 95 | 98 | 97 | 97 | 95 |
| Setaria Faberi | 50 | 100 | 100 | 100 | 100 | 100 | 100 |
| Setaria Faberi | 34 | 93 | 98 | 98 | 96 | 98 | 98 |
| Setaria Faberi | 57 | 80 | 96 | 98 | 82 | 98 | 99 |
| Setaria Glauca | 41 | 85 | 93 | 96 | 91 | 96 | 97 |
| Setaria Viridis | 47 | 87 | 87 | 90 | 90 | 90 | 88 |
| Setaria Viridis | 42 | 87 | 97 | 93 | 94 | 97 | 98 |
| Sida Spinosa | 41 | 99 | 99 | 100 | 100 | 100 | 99 |
| Solanum Carolinense | 29 | 13 | 46 | 52 | 0 | 53 | 73 |
| Solanum Ptycanthum | 34 | 99 | 99 | 99 | 99 | 99 | 99 |
| | | | | | | | |
| Overall Mean | | 88 | 94 | 95 | 91 | 95 | 96 |

## Claims

1. A method for the season-long control of unwanted vegetation, said method comprising a single post-emergence application of a herbicidal combination comprising a 2-(substituted benzoyl)-1,3-cyclohexanedione or metal chelate thereof, glyphosate or a salt thereof and an acetamide.

2. A method according to claim 1 wherein the 2-(substituted benzoyl)-1,3-cyclohexanedione is a compound of formula (I) 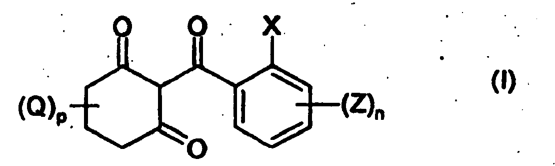 wherein X represents a halogen atom; a straight- or branched-chain alkyl or alkoxy group containing up to six carbon atoms which is optionally substituted by one or more groups -OR¹ or one or more halogen atoms; or a group selected from nitro, cyano, -CO₂R², -S(O)ₘR¹, -O(CH₂)ᵣOR¹, -COR², -NR²R³, -SO₂NR²R³, - CONR²R³, -CSNR²R³ and -OSO₂R⁴;
R¹ represents a straight- or branched-chain alkyl group containing up to six carbon atoms which is optionally substituted by one or more halogen atoms;
R² and R³ each independently represents a hydrogen atom; or a straight- or branched-chain alkyl group containing up to six carbon atoms which is optionally substituted by one or more halogen atoms;
R⁴ represents a straight-or branched-chain alkyl, alkenyl or alkynyl group containing up to six carbon atoms optionally substituted by one or more halogen atoms; or a cycloalkyl group containing from three to six carbon atoms;
each Z independently represents halo, nitro, cyano, S(O)ₘR⁵, OS(O)ₘR⁵, C₁₋₆ alkyl, C₁₋₆ alkoxy, C₁₋₆ haloalkyl, C₁₋₆ haloalkoxy, carboxy, C₁₋₆ alkylcarbonyloxy, C₁₋₆alkoxycarbonyl, C₁₋₆alkylcarbonyl amino, C₁₋₆ alkylamino, C₁₋₆ dialkylamino having independently the stated number of carbon atoms in each all group, C₁₋₆ alkylcarbonylamino, C₁₋₆ alkoxycarbonylamino, C₁₋₆alkylaminocarbonylamino, C₁₋₆dialkylaminocarbonylamino having independently the stated number of carbon atoms in each alkyl group, C₁₋₆ alkoxycarbonyloxy, C₁₋₆ alkylaminocarbonyloxy, C₁₋₆dialkylcarbonyloxy, phenylcarbonyl, substituted phenylcarbonyl, phenylcarbonyloxy, substituted phenylcarbonyloxy, phenylcarbonylamino, substituted phenylcarbonylamino, phenoxy or substituted phenoxy;
R⁵ represents a straight or branched chain alkyl group containing up to six carbon atoms;
each Q independently represents C₁₋₄alkyl or -CO₂R⁶ wherein R⁶ is C₁₋₄alkyl;
m is zero, one or two;
n is zero or an integer from one to four;
r is one, two or three; and
p is zero or an integer from one to six
and any agriculturally acceptable metal chelate thereof.

3. A method according to claim 2, wherein X is chloro, bromo, nitro, cyano, C₁-C₄. alkyl, -CF₃, -S(O)ₘR¹, or -OR¹; each Z is independently chloro, bromo, nitro, cyano, C₁-C₄ alkyl, -CF₃, -OR¹, -OS(O)ₘR⁵ or -S(O)ₘR⁵; n is one or two; and p is zero, one or two.

4. A method according to claim 3, wherein the 2-(substituted benzoyl)-1,3-cyclohexanedione of formula (I) is selected from the group consisting of 2-(2'-nitro-4'-methylsulphonylbenzoyl)-1,3-cyclohexanedione, 2-(2'-nitro-4'-methylsulphonyloxybenzoyl)-1,3-cyclohexanedione, 2-(2'-chloro-4'-methylsulphonylbenzoyl)-1,3-cyclohexanedione, 4,4-dimethyl-2-(4-methanesulphonyl-2-nitrobenzoyl)-1,3-cyclohexanedione, 2-(2-chloro-3-ethoxy-4-methanesulphonylbenzoyl)-5-methyl-1,3-cyclohexanedione and 2-(2-chloro-3-ethoxy-4-ethanesulphonylbenzoyl)-5-methyl-1,3-cyclohexanedione.

5. A method according to any one of claims 1 to 4, wherein the acetamide is a chloroacetamide or an oxyacetamide.

6. A method according to claim 5, wherein the chloroacetamide is a compound of formula (II) 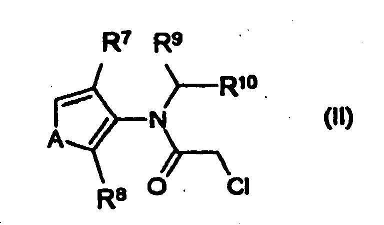 wherein R⁷ is hydrogen, methyl or ethyl; R⁸ is hydrogen, methyl or ethyl; R⁹ is hydrogen or methyl; R¹⁰ is methyl, -OCH₃, -CH₂OCH₃, -OCH₂CH₃,-CH₂OCH₂CH₂CH₃, -OCH(CH₃)₂, -OCH₂CH₂CH₂CH₃ or a group 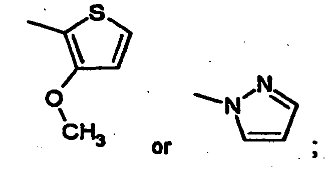 and A is S or CH=CH.

7. A method according to claim 6, wherein A is CH=CH; R⁷ is hydrogen, methyl or ethyl; R⁸ is hydrogen, methyl or ethyl; R⁹ is hydrogen or methyl; R¹⁰ is methyl, - OCH₃, -CH₂OCH₃, -OCH₂CH₃, -CH₂OCH₂CH₂CH₃, -OCH(CH₃)₂, or-OCH₂CH₂CH₂CH₃.

8. A method according to claim 7, wherein the chloroacetamide is selected from the group consisting of metolachlor, acetochlor and alachlor.

9. A method according to claim 8, wherein the chloroacetamide is s-metolachlor.

10. A method according to claim 6, wherein A is S; R⁷, R⁸ and R⁹ are methyl; and R¹⁰ is methoxymethyl.

11. A method according to claim 5, wherein the oxyacetamide is a compound of formula (III) 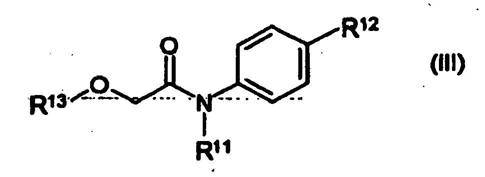 wherein R¹¹ is hydrogen, methyl, ethyl, propyl or isopropyl; R¹² is hydrogen or halo; and R¹³ is a group

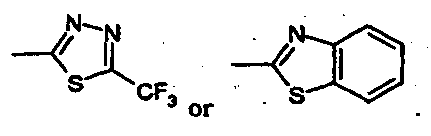

12. A method according to claim 11, wherein R¹¹ is methyl or isopropyl; R¹² is hydrogen or fluoro.

13. A method according to claim 12, wherein the oxyacetamide is flufenacet or mefanacet.

14. A method according to claim 13, wherein the oxyacetamide is flufenacet

15. A method according to any one of claims 1 to 14, wherein the combination further comprises one or more additional active ingredients.

16. The use of a herbicidal combination comprising a 2-(substituted benzoyl)-1,3-cyclohexanedione or metal chelate thereof, glyphosate or a salt thereof and an acetamide for the season-long control of unwanted vegetation by a single post-emergence application of the combination.

## Patentansprüche

1. Verfahren zur Bekämpfung unerwünschter Vegetation eine Saison lang, wobei das Verfahren eine einzelne Nachauflaufapplikation einer Herbizidkombination, umfassend ein 2-(substituiertes Benzoyl)-1,3-cyclohexandion oder ein Metallchelat davon, Glyphosat oder ein Salz davon und ein Acetamid, umfaßt.

2. Verfahren nach Anspruch 1, wobei das 2-(substituierte Benzoyl)-1,3-cyclohexandion eine Verbindung der Formel (I) 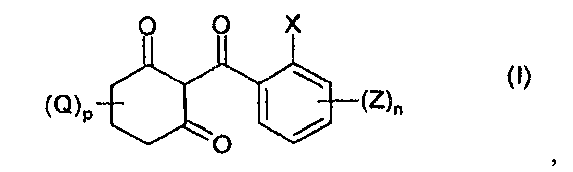 worin X ein Halogenatom; eine gerad- oder verzweigtkettige Alkyl- oder Alkoxygruppe, enthaltend bis zu sechs Kohlenstoffatome, die gegebenenfalls durch eine oder mehrere Gruppen -OR¹ oder ein oder mehrere Halogenatome substituiert ist; oder eine Gruppe, ausgewählt aus Nitro, Cyano, -CO₂R², -S(O)ₘR¹, -O(CH₂)ᵣOR¹, -COR², -NR²R³, -SO₂NR²R³, -CONR²R³, -CSNR²R³ und -OSO₂R⁴, darstellt;
R¹ eine gerad- oder verzweigtkettige Alkylgruppe, enthaltend bis zu sechs Kohlenstoffatome, die gegebenenfalls durch ein oder mehrere Halogenatome substituiert ist, darstellt;
R² und R³ jeweils unabhängig voneinander ein Wasserstoffatom oder eine gerad- oder verzweigtkettige Alkylgruppe, enthaltend bis zu sechs Kohlenstoffatome, die gegebenenfalls durch ein oder mehrere Halogenatome substituiert ist, darstellen;
R⁴ eine gerad- oder verzweigtkettige Alkyl-, Alkenyl- oder Alkinylgruppe, enthaltend bis zu sechs Kohlenstoffatome, gegebenenfalls substituiert durch ein oder mehrere Halogenatome; oder eine Cycloalkylgruppe, enthaltend drei bis sechs Kohlenstoffatome, darstellt; jedes Z unabhängig Halogen, Nitro, Cyano, S(O)ₘR⁵, OS(O)ₘR⁵, C₁₋₆-Alkyl, C₁₋₆-Alkoxy, C₁₋₆-Halogenalkyl, C₁₋₆-Halogenalkoxy, Carboxy, C₁₋₆-Alkylcarbonyloxy, C₁₋₆-Alkoxycarbonyl, C₁₋₆-Alkylcarbonyl, Amino, C₁₋₆-Alkylamino, C₁₋₆-Dialkylamino, das unabhängig die angegebene Anzahl an Kohlenstoffatomen in jeder Alkylgruppe aufweist, C₁₋₆-Alkylcarbonylamino, C₁₋₆-Alkoxycarbonylamino, C₁₋₆-Alkylaminocarbonylamino, C₁₋₆-Dialkylaminocarbonylamino, das unabhängig die angegebene Anzahl an Kohlenstoffatomen in jeder Alkylgruppe aufweist, C₁₋₆-Alkoxycarbonyloxy, C₁₋₆-Alkylaminocarbonyloxy, C₁₋₆-Dialkylcarbonyloxy, Phenylcarbonyl, substituiertes Phenylcarbonyl, Phenylcarbonyloxy, substituiertes Phenylcarbonyloxy, Phenylcarbonylamino, substituiertes Phenylcarbonylamino, Phenoxy oder substituiertes Phenoxy darstellt;
R⁵ eine gerad- oder verzweigtkettige Alkylgruppe, enthaltend bis zu sechs Kohlenstoffatome, darstellt;
jedes Q unabhängig C₁₋₄-Alkyl oder -CO₂R⁶ darstellt, wobei R⁶ C₁₋₄-Alkyl ist;
m null, eins oder zwei ist;
n null oder eine ganze Zahl von eins bis vier ist;
r eins, zwei oder drei ist; und
p null oder eine ganze Zahl von eins bis sechs ist,
und irgendein landwirtschaftlich akzeptables Metallchelat.

3. Verfahren nach Anspruch 2, wobei X Chlor, Brom, Nitro, Cyano, C₁-C₄-Alkyl, -CF₃, -S(O)ₘR¹ oder -OR¹ ist; jedes Z unabhängig Chlor, Brom, Nitro, Cyano, C₁-C₄-Alkyl, -CF₃, -OR¹, -OS(O)ₘR⁵ oder -S(O)ₘR⁵ ist; n eins oder zwei ist und p null, eins oder zwei ist.

4. Verfahren nach Anspruch 3, wobei das 2-(substituierte Benzoyl)-1,3-cyclohexandion der Formel (I) aus der Gruppe ausgewählt ist, bestehend aus 2-(2'-Nitro-4'-methylsulfonylbenzoyl)-1,3-cyclohexandion, 2-(2'-Nitro-4'-methylsulfonyloxybenzoyl)-1,3-cyclohexandion, 2-(2'-Chlor-4'-methylsulfonylbenzoyl)-1,3-cyclohexandion, 4,4-Dimethyl-2-(4-methansulfonyl-2-nitrobenzoyl)-1,3-cyclohexandion, 2-(2-Chlor-3-ethoxy-4-methansulfonylbenzoyl)-5-methyl-1,3-cyclohexandion und 2-(2-Chlor-3-ethoxy-4-ethansulfonylbenzoyl)-5-methyl-1,3-cyclohexandion.

5. Verfahren nach einem der Ansprüche 1 bis 4, wobei das Acetamid ein Chloracetamid oder ein Oxyacetamid ist.

6. Verfahren nach Anspruch 5, wobei das Chloracetamid eine Verbindung der Formel (II) 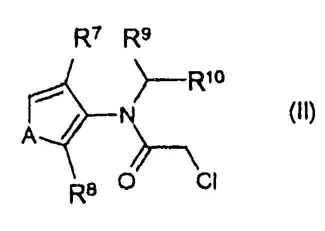 ist,
worin R⁷ Wasserstoff, Methyl oder Ethyl ist; R⁸ Wasserstoff, Methyl oder Ethyl ist; R⁹ Wasserstoff oder Methyl ist; R¹⁰ Methyl, -OCH₃, -CH₂OCH₃, -OCH₂CH₃, -CH₂OCH₂CH₂CH₃, -OCH(CH₃)₂, -OCH₂CH₂CH₂CH₃ oder eine Gruppe 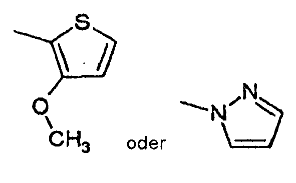 ist;
und A S oder CH=CH ist.

7. Verfahren nach Anspruch 6, wobei A CH=CH ist; R⁷ Wasserstoff, Methyl oder Ethyl ist; R⁸ Wasserstoff, Methyl oder Ethyl ist; R⁹ Wasserstoff oder Methyl ist; R¹⁰ Methyl, -OCH₃, -CH₂OCH₃, -OCH₂CH₃, -CH₂OCH₂CH₂CH₃, -OCH(CH₃)₂ oder -OCH₂CH₂CH₂CH₃ ist.

8. Verfahren nach Anspruch 7, wobei das Chloracetamid aus der Gruppe ausgewählt ist, bestehend aus Metolachlor, Acetochlor und Alachlor.

9. Verfahren nach Anspruch 8, wobei das Chloracetamid s-Metolachlor ist.

10. Verfahren nach Anspruch 6, wobei A S ist; R⁷, R⁸ und R⁹ Methyl sind und R¹⁰ Methoxymethyl ist.

11. Verfahren nach Anspruch 5, wobei das Oxyacetamid eine Verbindung der Formel (III) 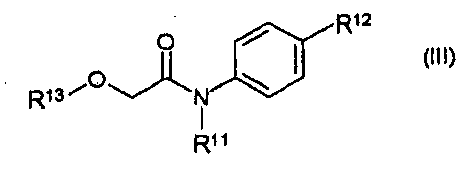 ist,
worin R¹¹ Wasserstoff, Methyl, Ethyl, Propyl oder Isopropyl ist; R¹² Wasserstoff oder Halogen ist und R¹³ eine Gruppe 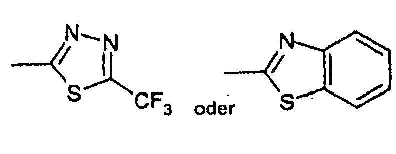 ist.

12. Verfahren nach Anspruch 11, wobei R¹¹ Methyl oder Isopropyl ist; R¹² Wasserstoff oder Fluor ist.

13. Verfahren nach Anspruch 12, wobei das Oxyacetamid Flufenacet oder Mefanacet ist.

14. Verfahren nach Anspruch 13, wobei das Oxyacetamid Flufenacet ist.

15. Verfahren nach einem der Ansprüche 1 bis 14, wobei die Kombination ferner einen oder mehrere weitere Wirkstoffe umfaßt.

16. Verwendung einer Herbizidkombination, umfassend ein 2-(substituiertes Benzoyl)-1,3-cyclohexandion oder ein Metallchelat davon, Glyphosat oder ein Salz davon und ein Acetamid, zur Bekämpfung unerwünschter Vegetation eine Saison lang durch eine einzelne Nachauflaufapplikation der Kombination.

## Revendications

1. Procédé de lutte contre la végétation indésirable durant toute une saison, ledit procédé comprenant une seule application en post-émergence d'une combinaison herbicide comprenant une 2-(benzoyl substitué)-1,3-cyclohexanedione ou un de ses chélates métalliques, du glyphosate ou un de ses sels et un acétamide.

2. Procédé selon la revendication 1, dans lequel la 2-(benzoyl substitué)-1,3-cyclohexanedione est un composé de formule (I) 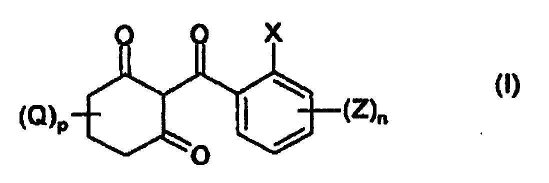 dans laquelle X représente un atome d'halogène; un groupe alkyle ou alcoxy linéaire ou ramifié contenant jusqu'à 6 atomes de carbone, qui est éventuellement substitué par un ou plusieurs groupes -OR¹ ou un ou plusieurs atomes d'halogène; ou un groupe choisi parmi nitro, cyano, -CO₂R², -S(O)ₘR¹, -O(CH₂)ᵣOR¹, -COR², -NR²R³, -SO₂NR²R³, -CONR²R³, -CSNR²R³ et -OSO₂R⁴;
R¹ représente un groupe alkyle linéaire ou ramifié contenant jusqu'à 6 atomes de carbone, qui est éventuellement substitué par un ou plusieurs atomes d'halogène;
R² et R³ représentent chacun indépendamment un atome d'hydrogène; ou un groupe alkyle linéaire ou ramifié contenant jusqu'à 6 atomes de carbone, qui est éventuellement substitué par un ou plusieurs atomes d'halogène;
R⁴ représente un groupe alkyle, alcényle ou alcynyle linéaire ou ramifié contenant jusqu'à 6 atomes de carbone, éventuellement substitué par un ou plusieurs atomes d'halogène; ou un groupe cycloalkyle contenant de 3 à 6 atomes de carbone;
chaque Z représente indépendamment halogéno, nitro, cyano, S(O)ₘR⁵, OS(O)ₘR⁵, alkyle en C₁-C₆, alcoxy en C₁-C₆, halogénoalkyle en C₁-C₆, halogénoalcoxy en C₁-C₆, carboxy, (alkyl en C₁-C₆)carbonyloxy, (alcoxy en C₁-C₆)carbonyle, (alkyl en C₁-C₆)carbonyle, amino, alkylamino en C₁-C₆, di(alkyl en C₁-C₆)amino ayant indépendamment le nombre d'atomes de carbone indiqué dans chaque groupe alkyle, (alkyl en C₁-C₆)carbonylamino, (alcoxy en C₁-C₆)carbonylamino, (alkyl en C₁-C₆)aminocarbonylamino, di(alkyl en C₁-C₆)aminocarbonylamino ayant indépendamment le nombre d'atomes de carbone indiqué dans chaque groupe alkyle, (alcoxy en C₁-C₆)carbonyloxy, (alkyl en C₁-C₆)aminocarbonyloxy, di(alkyl en C₁-C₆)carbonyloxy, phénylcarbonyle, phénylcarbonyle substitué, phénylcarbonyloxy, phénylcarbonyloxy substitué, phénylcarbonylamino, phénylcarbonylamino substitué, phénoxy ou phénoxy substitué;
R⁵ représente un groupe alkyle linéaire ou ramifié contenant jusqu'à 6 atomes de carbone;
chaque Q représente indépendamment alkyle en C₁-C₄ ou -CO₂R⁶ où R⁶ est alkyle en C₁-C₄;
m est 0, 1 ou 2;
n est 0 ou un entier de 1 à 4;
r est 1, 2 ou 3; et
p est 0 ou un entier de 1 à 6,
et ses chélates métalliques quelconques acceptables en agriculture.

3. Procédé selon la revendication 2, dans lequel X est chloro, bromo, nitro, cyano, alkyle en C₁-C₄, -CF₃, -S(O)ₘR¹, ou -OR¹, chaque Z est indépendamment chloro, bromo, nitro, cyano, alkyle en C₁-C₄, -CF₃, -OR¹, -OS(O)ₘR⁵ ou -S(O)ₘR⁵; n est 1 ou 2; et p est 0, 1 ou 2.

4. Procédé selon la revendication 3, dans lequel la 2-(benzoyl substitué)-1,3-cyclohexanedione de formule (I) est choisie dans le groupe constitué par la 2-(2'-nitro-4'-méthylsulfonylbenzoyl)-1,3-cyclohexanedione, la 2-(2'-nitro-4'-méthylsulfonyloxybenzoyl)-1,3-cyclohexanedione, la 2-(2'-chloro-4'-méthylsulfonyl-benzoyl)-1,3-cyclohexanedione, la 4,4-diméthyl-2-(4-méthanesulfonyl-2-nitro-benzoyl)-1,3-cyclohexanedione, la 2-(2-chloro-3-éthoxy-4-méthanesulfonylbenzoyl)-5-méthyl-1,3-cyclohexanedione, et la 2-(2-chloro-3-éthoxy-4-éthanesulfonyl-benzoyl)-5-méthyl-1,3-cyclohexanedione.

5. Procédé selon l'une quelconque des revendications 1 à 4, dans lequel l'acétamide est un chloroacétamide ou un oxyacétamide.

6. Procédé selon la revendication 5, dans lequel le chloroacétamide est un composé de formule (II) 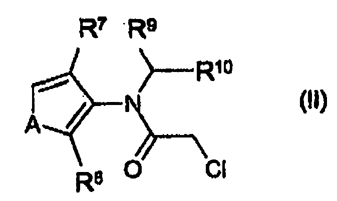 dans laquelle R⁷ est hydrogène, méthyle ou éthyle; R⁸ est hydrogène, méthyle ou éthyle; R⁹ est hydrogène ou méthyle; R¹⁰ est méthyle, -OCH₃, -CH₂OCH₃, -OCH₂CH₃, -CH₂OCH₂CH₂CH₃, -OCH(CH₃)₂, -OCH₂CH₂CH₂CH₃ ou un groupe 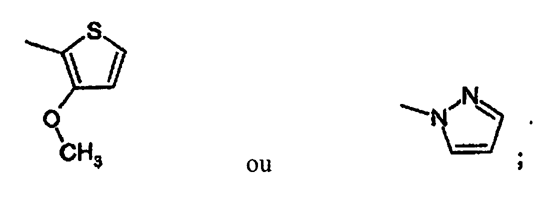 et A est S ou CH=CH.

7. Procédé selon la revendication 6, dans lequel A est CH=CH; R⁷ est hydrogène, méthyle ou éthyle; R⁸ est hydrogène, méthyle ou éthyle; R⁹ est hydrogène ou méthyle; R¹⁰ est méthyle, -OCH₃, -CH₂OCH₃, -OCH₂CH₃, -CH₂OCH₂CH₂CH₃, -OCH(CH₃)₂, ou -OCH₂CH₂CH₂CH₃.

8. Procédé selon la revendication 7, dans lequel le chloroacétamide est choisi dans le groupe constitué par le métolachlor, l'acétochlor et l'alachlor.

9. Procédé selon la revendication 8, dans lequel le chloroacétamide est le s-métolachlor.

10. Procédé selon la revendication 6, dans lequel A est S; R⁷, R⁸ et R⁹ sont méthyle; et R¹⁰ est méthoxyméthyle.

11. Procédé selon la revendication 5, dans lequel l'oxyacétamide est un composé de formule (III) 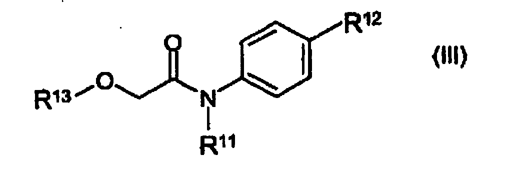 dans laquelle R¹¹ est hydrogène, méthyle, éthyle, propyle ou isopropyle; R¹² est hydrogène ou halogéno; et R¹³ est un groupe

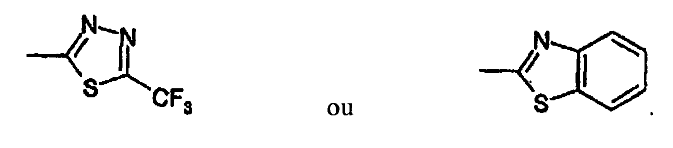

12. Procédé selon la revendication 11, dans lequel R¹¹ est méthyle ou isopropyle; R¹² est hydrogène ou fluoro.

13. Procédé selon la revendication 12, dans lequel l'oxyacétamide est le flufénacet ou le méfanacet.

14. Procédé selon la revendication 13, dans lequel l'oxyacétamide est le flufénacet.

15. Procédé selon l'une quelconque des revendications 1 à 14, dans lequel la combinaison comprend en outre un ou plusieurs ingrédients actifs supplémentaires.

16. Utilisation d'une combinaison herbicide comprenant une 2-(benzoyl substitué)-1,3-cyclohexanedione un de ses chélates métalliques, du glyphosate ou un de ses sels et un acétamide pour la lutte contre la végétation indésirable durant toute une saison par une seule application en post-émergence de la combinaison.
